# EUROPEAN PATENT SPECIFICATION

(11) **EP 4 530 807 B1**
(45) Date of publication and mention of the grant of the patent: **25.03.2026**
(21) Application number: 23200435.8
(22) Date of filing: 28.09.2023
(51) Int. Cl.: G06F 3/0481, G06F 9/451

(54) **IMPROVED HUMAN-MACHINE INTERFACE FOR CONVERSATIONAL AI AGENTS**
VERBESSERTE MENSCH-MASCHINE-SCHNITTSTELLE FÜR KONVERSATIONS-AI-AGENTEN
INTERFACE HOMME-MACHINE AMÉLIORÉE POUR AGENTS AI CONVERSATIONNELS

(43) Date of publication of application: 02.04.2025
(73) Proprietor: Warmwind AG, 07749 Jena (DE)
(72) Inventor: Schilling, Maximilian, Jena (DE)
(74) Representative: Best, Bastian

(56) References cited:
- US-A1- 2019 012 198
- US-A1- 2022 101 844

## Description

### TECHNICAL FIELD

The present disclosure generally relates to the field of artificial intelligence (AI) based agents, and more particularly to techniques for agent-assisted execution of tasks. Certain embodiments may provide for improved interaction between human users of a computer and AI based agents.

### BACKGROUND

AI assistants have become increasingly integrated into various aspects of modern life. For example, AI-driven voice assistants, such as Siri (Apple), Google Assistant (Google), Alexa (Amazon), and Cortana (Microsoft), have reached widespread adoption. The same applies to chatbots, i.e., programs designed for natural language interaction, which nowadays play an important role in customer service, e-commerce, and various other sectors by providing automated responses to user queries. The advent of large language models, such as GPT, BERT, T5 and Falcon LLM, has significantly advanced the capabilities of these AI assistants, empowering them with an unprecedented ability to understand and generate human-like text, thereby revolutionizing the landscape of human-computer interaction and information processing.

While the above-mentioned AI assistants primarily focus on answering questions, we are currently witnessing a paradigm shift towards more sophisticated AI agents that actively perform tasks and engage in complex interactions. These AI agents, equipped with advanced machine learning and natural language understanding capabilities, are poised to transform how we navigate the digital realm in various application domains. For instance, in the field of personal productivity, Microsoft's Cortana can not only answer queries but also schedule meetings, set reminders, and automate various office tasks. In the field of autonomous vehicles, Tesla's "Autopilot" is said to be able to navigate roads, change lanes, and even park the vehicle. In the industrial field, AI agents are revolutionizing processes and operations by carrying out tasks that were previously labor-intensive and error-prone. For example, in manufacturing, AI-driven robots and agents are becoming increasingly adept at quality control, inspecting products for defects, and adjusting production parameters in real-time to maintain quality standards. In logistics and supply chain management, AI agents are optimizing routes for delivery vehicles, managing inventory levels, and predicting demand to ensure efficient and cost-effective operations. Additionally, in energy and utilities, AI agents are employed to monitor and control the distribution of electricity, optimizing grid stability and reducing energy wastage. This transition from passive AI assistants to proactive AI agents marks a pivotal moment in the integration of artificial intelligence into our daily lives, offering unparalleled convenience and efficiency across diverse domains.

US2019/0012198 A1 discloses methods and apparatus for engaging an automated assistant to perform multiple tasks through a multitask command. The multitask command can be a command that, when provided by a user, causes the automated assistant to invoke multiple different agent modules for performing tasks to complete the multitask command. During execution of the multitask command, a user can provide input that can be used by one or more agent modules to perform their respective tasks. Furthermore, feedback from one or more agent modules can be used by the automated assistant to dynamically alter tasks in order to more effectively use resources available during completion of the multitask command.

US2022/0101844 A1 discloses a conversation engine to perform conversations with users using chatbots customized for performing a set of tasks that can be performed using an online system. The conversation engine loads a chatbot configuration that specifies the behavior of a chatbot including the tasks that can be performed by the chatbot, the types of entities relevant to each task, and so on. The conversation may be voice based and use natural language. The conversation engine may load different chatbot configurations to implement different chatbots. The conversation engine receives a conversation engine configuration that specifies the behavior of the conversation engine across chatbots.

US 10,636,419 B2 discloses a chatbot that learns a person's related "intents" when asking for information and thereafter, in response to an initial query, which the chatbot answers, the chatbot generates a secondary dialogue, either providing the person with additional information or inquiring as to whether the person wishes to know more about a subject. The chatbot may use an external trigger such as time, event, etc. and automatically generate a query or give information to the person without any initial query from the person.

EP 0 862 113 A2 discloses a system together with an autonomous agent. The agent includes an interaction management layer separate from a task management layer. The interaction management layer includes a service handler and a resource manager. The service handler determines whether service requests from other agents should be passed on to the task management layer. The resource manager maintains acquaintance information about resources, such as other agents, that are present in the system. The task management layer includes a task manager that allocates tasks among zero or more task threads. Each task thread includes a task processor that breaks tasks into primitive actions, a task scheduler that interacts with the resource manager to allocate the resources required to execute the actions, and a task executor that executes the actions. The various modules of the agent communicate through a shared task meta controller.

US 2019/166069 A1 discloses a computer program that employs a drag-and-drop user interface for managing dialogue states, tracking dialogue context, understanding dialogue utterances, and managing dialogue sessions. Each dialogue element is defined in a "node" that can be dragged and dropped into a canvas of the user interface. An embodiment provides wiring mechanisms to freely link nodes. Dialogue utterances are contained in messages that flow through the wires linking different nodes until exiting the canvas to an end user. An executable image of a conversational agent is then generated by compiling the source code associated with the nodes based on their connections. A conversational agent can be deployed in an electronic device such as a home device, which configured to perform an action in response to a user verbal command or request using the conversational agent deployed therein.

US 6,754,647 B1 discloses a method and apparatus for the development and implementation of virtual robot's (bot's) directed natural language interaction with computer users. Bots employing the present invention base natural language interaction on a predefined universe of discourse that is decomposed hierarchically into domains. A data structure provides a storage area for each domain. The data structure may reflect the hierarchical decomposition. Domain topics containing program code directing the bot's interaction are placed in domain storage areas. Pattern lists associate words expected to be "heard" by the bot with particular domain topics. Domain topics are provided, as appropriate, to direct a user's attention toward the instant domain's parent, siblings, or children, with lower topics in the hierarchy getting higher preference. Domain censoring and domain tiebreakers improve usability. Universes of discourse developed in accordance with the present invention may advantageously be stored on portable data storage media.

However, one shortcoming of most AI agents today is that they are more or less black-box models. Although users can input information and receive responses from such models, they often lack sufficient insight to understand, observe and learn how exactly the agent solves a particular task. Consequently, users frequently find themselves unable to understand why the agent's output differs from their desired output.

As a result, interaction between users and agents is up until now often limited to rather simple tasks (e.g., voice commands for playing music, chatbots providing pre-defined answers to written or spoken questions etc.).

It is therefore an objective of the present disclosure to provide an improved way of interaction between users and AI agents, thereby overcoming the above-mentioned disadvantages of the prior art at least in part.

### SUMMARY OF THE DISCLOSURE

The objective is solved by the subject-matter defined in the independent claims. Advantageous modifications of embodiments of the present disclosure are defined in the dependent claims as well as in the description and the figures.

One aspect of the present disclosure relates to a computer-implemented method. The method is performed by a conversational artificial intelligence (AI) agent. The method comprises a step of receiving, from a user, a user request in natural language indicating a task to be performed. The method comprises a step of determining one or more subtasks for completing the task to be performed. The method comprises a step of executing the one or more determined subtasks. The step of executing the one or more subtasks comprises a step of displaying, for at least one of the subtasks, an application window on a graphical user interface, GUI, comprising a visualization associated with the subtask. Preferably, the GUI is a GUI displayed on a computing device associated with the user, in particular the computing device which was used to issue the user request.

This way, a novel advanced interaction paradigm between users and AI agents is provided which offers a transparent way of following and understanding the actions performed by the AI agent. This is achieved by the AI agent not only performing the determined (sub-)task(s) but also providing a corresponding visualization. In this advanced interaction paradigm, the user is presented with a graphical user interface (GUI) that offers an immersive and intuitive experience. Within this GUI, the AI agent can orchestrate tasks by opening application windows and then interacting with the corresponding applications, such as by inputting text, copying content between different windows, and the like. Conceptually, this approach mirrors a collaborative screen-sharing session akin to a video conference involving human users. Thanks to the advanced interaction paradigm, the user not only interacts with the AI agent but can also visually witness the agent's actions in real-time.

This novel interface not only enhances the user's engagement but also significantly improves the human-machine interaction from a technical perspective. From a technical standpoint, this enriched interaction mode substantially enhances the transparency and traceability of the AI agent's actions. By providing users with a direct visual representation of the AI agent's activities, it fosters an environment where users can better comprehend, verify, and guide the agent's actions. This transparency leads to improved user control and oversight over complex tasks, promoting accuracy and reducing the chances of errors. Moreover, this innovative approach aligns with the notion that a feature defining the presentation of information can indeed produce a technical effect. It empowers users by enabling a continued and guided human-machine interaction process where the presentation of information is not merely passive but actively assists users in performing the tasks at hand. An additional technical advantage of the described user interface paradigm concerns real-time error detection and correction: The visual interface allows users to quickly identify errors or unexpected behaviour in the AI agent's actions. Users can then intervene promptly to correct any issues, reducing the likelihood of task failures and data inconsistencies. Another advantage concerns improved task customization: Users can provide real-time guidance and preferences to the AI agent by directly interacting with the GUI. This enables fine-tuning of tasks to meet specific requirements, increasing task accuracy and relevance.

Yet another advantage concerns efficient troubleshooting: When issues arise during task execution, the visual interface simplifies the troubleshooting process. Users can pinpoint the source of problems more easily, leading to faster resolution and minimizing disruptions.

As mentioned above, the method is performed by a conversational AI agent. A conversational AI agent may be understood as a computer-based system or software application that employs natural language processing (NLP) and machine learning techniques to engage in human-like conversations and interactions with users. An AI agent may be built upon, may use or may otherwise have access to, a large language model such as GPT, BERT, XLNet, or the like. An AI agent may be configured to understand and respond to spoken or written language in a conversational manner, enabling it to provide information, answer questions, perform tasks, and carry out complex interactions, all while simulating human conversational behaviours and understanding user intent. Conversational AI agents find applications in various domains, including customer support, virtual assistants, chatbots, and voice-activated systems, enhancing human-computer communication and task automation. An AI agent may be understood as a special case of an AI assistant, the latter being primarily focused on answering questions. An AI agent typically has the additional capability of performing tasks and engage in more complex interactions.

According to a further aspect of the present disclosure, causing the display further comprises a step of causing, for each subtask of the one or more subtasks, a display of an application window on the GUI, each comprising a visualization associated with the corresponding subtask, wherein the displaying of each application window may be based on a processing order of the one or more subtask for completing the task to be performed.

This way, displaying multiple application windows according to the processing order for completing the (sub-)tasks allows a user to better learn how the agent is sequentially solving the requested task. In addition, some of the application windows may also be displayed in parallel (i.e., some of the subtasks are performed in parallel). Accordingly, the displaying of multiple application windows at the same time allows a user to observe multiple actions performed by the agent(s) in parallel.

According to a further aspect of the present disclosure, the visualization associated with the subtask comprises an initiation visualization indicating a start of the subtask, a progress visualization indicating a progress of the subtask, a finalization visualization indicating a completion of the subtask and/or an overview visualization indicating a progress overview of the one or more subtasks. Adapting the visualization within the application to a current state of the (sub-)task(s) performed by the corresponding agent(s) provides a convenient way of observing the actions performed by the agent(s) as well as keeping track of the overall progress of the requested task.

According to a further aspect of the present disclosure, the method may further comprise a step of receiving a user input for modifying the application window. Modifying the application window may comprise modifying one or more characteristics of the application window, in particular a size of the window and/or a position of the window on the display. Additionally or alternatively, modifying the application window may comprise modifying content of the application window. This way, a user is not only able to modify the application window(s) but also the content of the application window (i.e., the way the agent is performing the corresponding (sub-)task). For example, the user may modify a position of the application window by dragging the application window to a different position, to the foreground, or the like. This way, the user is able to reposition application windows according to his/her preferences. For example, if two subtasks are performed in parallel, the user may prefer to have both corresponding application windows positioned next to each other. For example, the user may modify a size of the application window by maximizing, minimizing, increasing or decreasing the size of the application window. This way, a user can for example minimize an application window in which a subtask is performed which is of no (current) interest for the user (e.g., in a subtask in which a search is currently conducted and for which the user is only interested in the search results but not in the search itself), hide an application behind another application window, or the like.

According to a further aspect of the present disclosure, the method may further comprise a step of automatically modifying one or more characteristics of the application window, in particular a size of the window and/or a position of the window on the display. Generally, the same or similar modifications are conceivable as described in the above scenario of user-initiated modification. The difference is that in this aspect, the modification takes place automatically, i.e., without being triggered by a user input.

The (automatic) modifying of one or more characteristics of an application window may comprise arranging the current application window relative to other application windows (which may be associated with other subtasks). For example, an ordering of multiple overlapping application windows may be modified, which is also referred to as the Z-order. The term "Z-order" should be understood as the order of application windows along the Z-axis. In coordinate geometry, X typically refers to the horizontal axis (left to right), Y to the vertical axis (up and down), and Z refers to the axis perpendicular to the other two (forward or backward). One can think of the application windows as a series of planes parallel to the surface of the display surface. The application windows are therefore stacked along the Z-axis, and the Z-order information thus specifies the front-to-back ordering of the windows on the screen. It may be practicable to bring an application window to the foreground when it is the application window in which the current task is displayed.

Another way of (automatically) modifying one or more characteristics of an application window may comprise arranging the application window at or near the center of the GUI as a main window (in particular if said application window is associated with the currently processed subtask) and, optionally, arranging other application windows which are supplementary to the current subtask near the main window.

The above-described ways of modifying one or more characteristics of an application window serve to help the human user understand the internal status of the task processing, thereby improving the human-machine interface even further.

According to a further aspect of the present disclosure, the step of executing a subtask of the one or more determined subtasks may comprise a step of performing one or more actions for progressing the subtask. The one or more actions may comprise at least an input action to a GUI element of the application window. This way, the input actions (e.g., clicking on certain GUI elements, filling out fields of the GUI etc.) are better traceable for the user.

According to a further aspect of the present disclosure, the step of executing a subtask of the one or more determined subtasks may comprise a step of receiving information associated with another subtask of the one or more subtasks from another AI agent. The information may be necessary for progressing and/or completing the subtask. Additionally or alternatively, the step of executing a subtask of the one or more determined subtasks may comprise a step of transmitting information associated with the subtask to another AI agent. The information may be necessary for progressing and/or completing another subtask of the one or more subtasks. This way, communication between the agents performing the subtasks is enabled which improves the efficiency of the overall system architecture. This is because, rather than in a centralized system architecture in which all data/information traffic is routed over a central point, direct communication between agents overcomes issues associated with such a central point (e.g., single point of failure, bottleneck problem etc.).

According to a further aspect of the present disclosure, the step of transmitting the information associated with the subtask may be based on a user configuration, in particular a user preference and/or a user permission. This way, links for communications between the agents can be adjusted based on the user's preferences or permission. As a result, behaviour of the agents (e.g., with respect to the transmission and reception of information between each other and/or applications) can be modified in a way that suits the user best. For example, if the user requests a presentation about a certain topic, the user may additionally at a user configuration configuring that only open-source information or data (e.g., open-source images without copy right) are used for the presentation.

According to a further aspect of the present disclosure, the method further comprises a step of modifying, before transmitting the information associated with the subtask to the other agent, the information according to an information policy. This way, undesired disclosure of relevant information (e.g., sensitive data) to third parties can be prevented.

According to a further aspect of the present disclosure, the step of modifying the information according to the information policy may comprise a step of filtering, preferably using an AI model, user related, secret and/or internal information and/or information associated with a conversation between the user and the conversational AI agent such that the filtered information is not transmitted to the other AI agent. Alternatively or additionally, the step of modifying the information according to the information policy may comprise a step of rendering at least part of the information anonymous. Alternatively or additionally, the step of modifying the information according to the information policy may comprise a step of applying a traceability mark to the information associated with the subtask. Filtering the information results in only the filtered information (e.g., the information allowed to be disclosed to third parties) being transmitted resulting in increased system security. By way of pseudo anonymisation of the information, data utility (i.e., the usefulness of the information) is kept while on the other hand protecting the user's privacy. Adding the traceability mark allows to track where the information is transmitted to which results in improved system transparency.

According to a further aspect of the present disclosure, the method may further comprise a step of instantiating an AI agent for each of the one or more subtasks. Each instantiated AI agent may be responsible for completing one subtask of the one or more subtasks. This way, even if the overall task requested by the user is of high complexity, an efficient way of processing the task is provided by dividing it into subtasks of lower complexity with each subtask being completed by a corresponding agent.

According to a further aspect of the present disclosure, the method may further comprise a step of releasing one or more of the instantiated AI agents upon completion of the corresponding subtask. This way, releasing an agent once the corresponding subtask is completed avoids potential issues with buffer overflows and thus improves the resource usage of the system (e.g., with respect to memory usage).

According to a further aspect of the present disclosure, the progress overview of the one or more subtasks may comprise one or more subtasks in progress, one or more upcoming subtasks, one or more completed subtasks or any combination thereof. This way, a user is able see at first glance what the current status of the task progress is.

According to a further aspect of the present disclosure, the user request may additionally comprise text, one or more data files or any combination thereof. This way, a user can provide additional information about the requested task. For example, besides requesting a presentation about a certain topic, the user could provide certain data files (e.g., a general structure or agenda of the presentation, or images the user wants to have included in the presentation).

According to a further aspect of the present disclosure, the step of causing the display of the application window on the GUI comprising the visualization associated with the subtask may be similar to a screen-sharing session between two or more users. This way, as already mentioned further above, the user is able to follow the task progress of the agent(s) in a similar way as if the user would participate in an online screening sharing session. As screen-sharing sessions between human users is a commonly used technique, utilizing this technique and adapting it two screen-sharing sessions between AI agents and human users does not represent a burden to the user with respect to user friendliness or settling-in period.

According to a further aspect of the present disclosure, the entire process may be started by a user on one data processing apparatus and maybe then resumed at another data processing apparatus. This applies both to the actual processing of the subtasks and the user's observing activities. For example, the user might order a certain task to be performed at the user's home computer. When the processing has started, the user may shut down the home computer and resume observing the task progression on the user's smartphone.

Another aspect of the present disclosure relates to a data processing apparatus comprising means for performing the method of any one of the aspects described herein.

Another aspect of the present disclosure relates to a computer program or a computer-readable medium having stored thereon a computer program, the computer program comprising instructions which, when the program is executed by a computer, cause the computer to carry out the method of any one of the aspects described herein.

### BRIEF DESCRIPTION OF THE DRAWINGS

The disclosure may be better understood by reference to the following drawings:
- Fig. 1:: An overview of a method in accordance with embodiments of the present disclosure.
- Fig. 2:: An overview of an agent hierarchy in accordance with embodiments of the present disclosure.
- Fig. 3:: A first overview of an interaction between a user and an agent in accordance with embodiments of the present disclosure.
- Fig. 4:: A second overview of an interaction between a user and an agent in accordance with embodiments of the present disclosure.
- Fig. 5:: A third overview of an interaction between a user and an agent in accordance with embodiments of the present disclosure.
- Fig. 6:: A fourth overview of an interaction between a user and an agent in accordance with embodiments of the present disclosure.
- Fig. 7:: A fifth overview of an interaction between a user and an agent in accordance with embodiments of the present disclosure.
- Fig. 8:: A sixth overview of a mobile version of a graphical user interface in accordance with embodiments of the present disclosure.
- Fig. 9:: A seventh overview of a graphical user interface in accordance with embodiments of the present disclosure.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

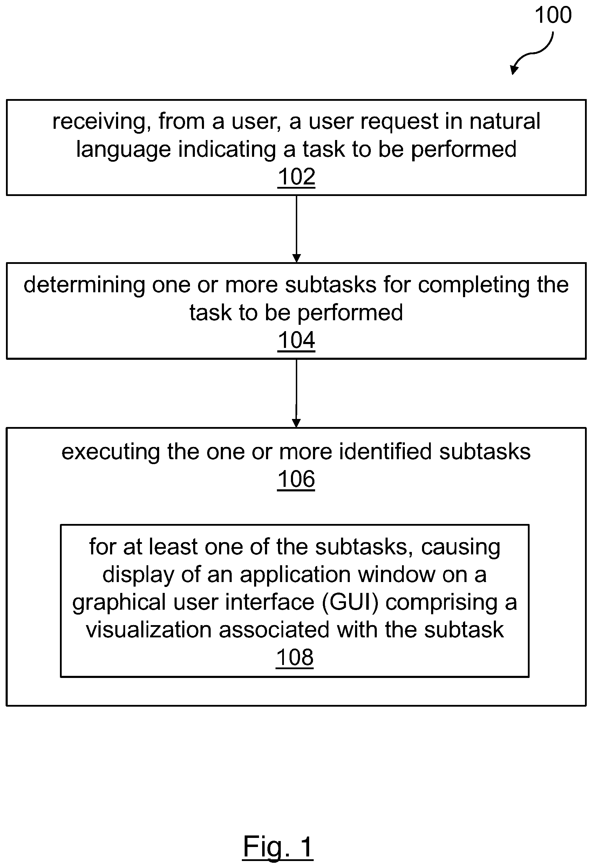

Fig. 1 illustrates an overview of a method 100 in accordance with embodiments of the present disclosure. The method 100 is performed by a conversational artificial intelligence (AI) agent. The method 100 comprises a step 102 of receiving, from a user, a user request in natural language indicating a task to be performed. The user request may additionally comprise text, one or more data files or any combination thereof. In one example, the user request is a text-based prompt much like those known from chat-based language models such as Chat-GPT.

The method comprises a step 104 of determining one or more subtasks for completing the task to be performed. In an exemplary implementation, the AI agent relies on well-established techniques commonly employed in the field. This may involve an analysis of the requested task's parameters, user preferences, and/or system constraints, making use of available machine-learning models and/or established algorithmic decision-making approaches to evaluate and prioritize the necessary subtasks for optimal task completion. For instance, the AI agent may apply established natural language processing techniques to comprehend the user's intent and context, breaking down the requested task into its constituent elements. It may then employ established algorithms for assessing the computational complexity, resource requirements, and/or potential dependencies associated with each subtask. Additionally, the agent may reference user-specific preference models, historical interaction data, and/or pre-defined task templates to further fine-tune its subtask selection.

Moreover, the AI agent's adaptability may be rooted in established principles of reinforced learning and/or real-time feedback mechanisms, allowing it to continually refine its subtask determination strategy based on past interactions. This dynamic approach may ensure that the chosen subtasks align effectively with user expectations and system capabilities, ultimately enhancing the efficiency and user-centric nature of task execution.

By combining these concrete and recognized techniques and methodologies, the AI agent is equipped to effectively discern, prioritize, and execute the most appropriate subtasks in response to a user's requested task. This approach contributes to the overall efficiency and effectiveness of task completion within the AI system and facilitates a seamless user experience.

The method comprises a step 106 of executing the one or more identified subtasks. The execution of a subtask by the AI agent may comprise a multifaceted process that incorporates various technical components and methodologies. In accordance with certain embodiments, the AI agent may employ one or more of the following steps and/or techniques to execute a subtask:
1. Task Parsing: The AI agent begins by parsing the specific subtask to gain a comprehensive understanding of its requirements and objectives. This involves the extraction of relevant information, such as input data, parameters, and contextual cues, necessary for the successful execution of the subtask.
2. Algorithm Selection: Based on the nature of the subtask and the available data, the AI agent selects an appropriate algorithm or methodology to carry out the task effectively. This decision is often guided by machine learning models and heuristic algorithms tailored to specific subtask categories, as already mentioned above.
3. Data Processing: The AI agent may pre-process and refine input data as needed to ensure it is in a suitable format for analysis or interaction with external systems. This may involve data cleaning, transformation, or enrichment processes.
4. Resource Allocation: Depending on the computational requirements of the subtask, the AI agent may allocate necessary computing resources, including CPU, memory, and storage capacity, either locally or on remote servers, to execute the task efficiently.
5. Interaction with External Systems: If the subtask involves interfacing with external applications, databases, and/or services, the AI agent may initiate and manage the necessary interactions. This can include opening application windows (as will be further explained below), entering data, retrieving information, or making API calls.
6. Monitoring and Feedback: Throughout the execution process, the AI agent may continuously monitor the progress and outcomes of the subtask. It may check for errors, exceptions, or deviations from the expected behaviour, and it may adapt its approach in real-time to address unforeseen challenges.
7. Result Generation: Once the subtask is completed, the AI agent generates the desired output or result. This output can take various forms, such as text, numerical data, visual representations, or even actions performed within an application or system.
8. Output Presentation: In cases where the subtask's output needs to be presented to the user, the AI agent may format the results for display in the graphical user interface (GUI) or convey the information through natural language text or visual elements.
9. Feedback Loop: The AI agent can leverage feedback from the user or other system components to refine its subtask execution strategies over time, improving its performance and adaptability.

By orchestrating these steps and leveraging a combination of machine learning, data processing, resource management, and/or interaction with external systems, the AI agent effectively executes subtasks to accomplish user-defined objectives. This comprehensive process ensures the agent's ability to carry out a wide range of tasks and actions in a dynamic and user-centric manner.

The step 106 of executing the one or more subtasks comprises a step 108 of causing, for at least one of the subtasks, a display of an application window on a graphical user interface, GUI, comprising a visualization associated with the subtask.

The method 100 may be implemented as a computer program. The computer program may relate to, or essentially provide, an operating system in which the agent(s) of the present disclosure are embedded. In said operating system, the agent(s) may have similar rights as users of traditional operating systems (e.g., accessing applications, installing applications, deinstalling applications, interaction with peripherals etc.). These interactions (e.g., steps of method 100), may be visualized in a way that the human user of the data-processing apparatus, e.g., a computer on which the computer program is running, is able to observe, follow and/or learn from the visualized interactions of the agent(s). Upon instantiating an agent, an interaction space (e.g., application window(s)) for the agent is constructed in which the agent is able to perform interactions as well as corresponding visualizations to the user. It should be understood that the concepts disclosed herein are largely agnostic to the geographic location of the AI agent(s). Rather, these concepts maintain their operability across a spectrum of deployment scenarios, irrespective of the specific instantiation of computing resources.

For instance, the AI agent(s) may be executed remotely on one or more dedicated servers, while the user, situated at a different geographical location, interfaces with and observes the graphical user interface (GUI) from their local computer device. Alternatively, the AI agent(s) may be locally instantiated and operated directly on the user's computer device, facilitating a more localized and immediate interaction experience. Additionally, a hybrid configuration is conceivable, wherein certain AI agent(s) are executed on servers to harness computational scalability and efficiency, while others are deployed locally on the user's device to optimize responsiveness and/or address privacy concerns.

This versatile adaptability to various deployment scenarios underscores the robustness and applicability of the disclosed concepts, accommodating a wide array of use cases and computing environments, and ensuring that users can seamlessly engage with AI-driven interactions regardless of their chosen deployment architecture.

The step 108 of causing the display further comprises a step of causing, for each subtask of the one or more subtasks, a display of an application window on the GUI, each comprising a visualization associated with the corresponding subtask, wherein the displaying of each application window may be based on a processing order of the one or more subtask for completing the task to be performed. The displaying of the application window on the GUI comprising the visualization associated with the subtask may be similar to a screen-sharing session between two or more users.

The visualization associated with the subtask comprises an initiation visualization indicating a start of the subtask, a progress visualization indicating a progress of the subtask, a finalization visualization indicating a completion of the subtask and/or an overview visualization indicating a progress overview of the one or more subtasks. The progress overview of the one or more subtasks may comprises one or more subtasks in progress, one or more upcoming subtasks, one or more completed subtasks or any combination thereof. The method 100 may further comprise a step of receiving a user input for modifying the application window. Modifying the application window may comprise modifying one or more characteristics of the application window, in particular a size of the window and/or a position of the window on the display. Additionally or alternatively, modifying the application window may comprise modifying content of the application window.

The step of executing a subtask of the one or more identified subtasks may comprise a step of performing one or more actions for progressing the subtask. The one or more actions may comprise at least an input action to a GUI element of the application window. The step of executing a subtask of the one or more determined subtasks may comprises a step of receiving information associated with another subtask of the one or more subtasks from another AI agent. The information may be necessary for progressing and/or completing the subtask. The step of executing a subtask of the one or more determined subtasks may comprise a step of transmitting information associated with the subtask to another AI agent. The information may be necessary for progressing and/or completing another subtask of the one or more subtasks.

The step of transmitting the information associated with the subtask may be based on a user configuration, in particular a user preference and/or a user permission. The method 100 further comprises a step of modifying, before transmitting the information associated with the subtask to the other agent, the information according to an information policy. The step of modifying the information according to the information policy comprises a step of filtering, preferably using an AI model, user related, secret and/or internal information and/or information associated with a conversation between the user and the conversational AI agent such that the filtered information is not transmitted to the other AI agent. Alternatively or additionally, the step of modifying the information according to the information policy may comprise a step of rendering at least part of the information anonymous. Alternatively or additionally, the step of modifying the information according to the information policy may comprise a step of applying a traceability mark to the information associated with the subtask.

The method 100 may further comprise a step of instantiating an AI agent for each of the one or more subtasks. Each instantiated AI agent may be responsible for completing one subtask of the one or more subtasks. The method 100 may further comprise a step of releasing one or more of the instantiated AI agents upon completion of the corresponding subtask.

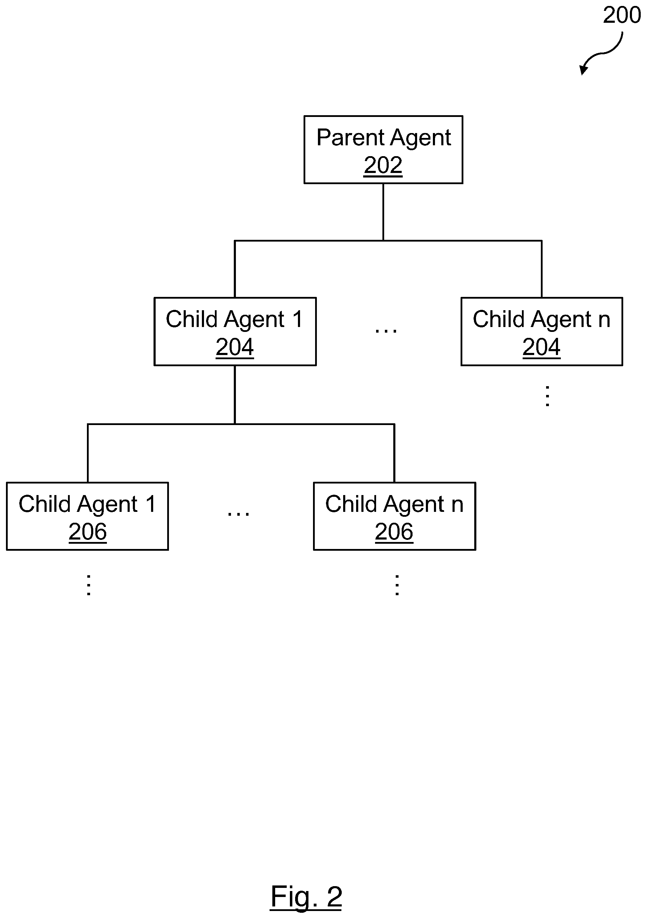

Fig. 2 illustrates an overview of an agent hierarchy 200 in accordance with embodiments of the present disclosure. The agent hierarchy 200 may comprise a parent agent 202 such as the conversational artificial intelligence (AI) agent according to the aspects of the present disclosure. The parent agent 202 represents the highest hierarchical level of the agent hierarchy 200 and may be responsible for the first interaction with a user (e.g., receiving a user request indicating a task to be performed), for determining one or more subtasks for completing the task to be performed, for executing the one or more identified subtasks, for causing, for at least one of the subtasks, the display of an application window on a GUI comprising a visualization associated with the subtask and/or for the last interaction (e.g., presenting, outputting and/or providing a result of the user request to the user).

As explained above with respect to Fig. 1, an AI agent may be instantiated for each determined subtask, or at least for some of the subtasks. Fig. 2 illustrates exemplary child agents 204, 206 which may be instantiated by an agent of a higher hierarchy level. For example, the parent agent 202 may receive the user request indicating a task to be performed and determine one or more subtasks for completing the task. Assuming the parent agent 202 has determined two subtasks, the parent agent 202 may execute these subtasks either by completing them itself or by instantiating one or more child agents 204 for one or both of the subtasks. For example, the parent agent 202 may instantiate two child agents 204, one for each of the two determined subtasks. Upon completion of the corresponding subtask(s) the corresponding agent may be released. Releasing an agent may either be done by the agent instantiating the agent (e.g., child agent 1 204 instantiating the child agents 206 may also be the one releasing the child agents 206), by the parent agent 202 (e.g., if a more centralized architecture according to a master-slave principle is required) or by any other agent of the architecture 200. The child agents may also be conversational AI agents such as the parent agent 202.

There are several options how a first agent may determine whether a second agent can be released. First, a subtask with which the second agent was entrusted and instantiated for may be associated with a predefined duration. Accordingly, the first agent may release the second agent once the predefined duration is reached (e.g., determined using a timer started upon instantiating the second agent). Second, upon receiving necessary information (e.g., the result of the completed subtask performed by the second agent and/or an indication that the second agent is finished with competing the subtask). Third, the second agent may transmit in a predefined frequency (e.g., each millisecond) a keep-alive signal based on which the first agent can determine to not yet release the second agent. Once the first agent does no longer receive said keep-alive signal (e.g., because the second agent has completed the subtask or has crashed/frozen etc.) the first agent can determine to release the second agent. Of course, these options may also be combined.

The advantage of the first option is that in a situation in which the second agent may have frozen or crashed (i.e., stopped working e.g., due to an error or bug) a deterministic option is provided for releasing the second agent. The advantage of the second option is that the agent is only released if the necessary information is received. The advantage of the third option is that based on the keep-alive signal it can be efficiently determined whether the agent can be released or is still working on a task.

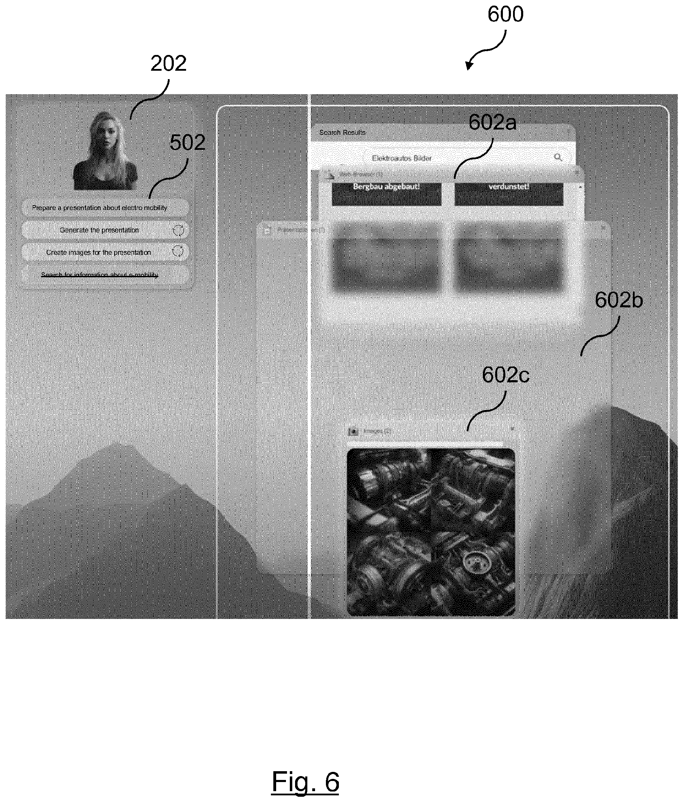

Each of the child agents 204 may then either execute the corresponding subtask by completing the subtask itself or determine one or more further (sub-)subtasks for completing the corresponding subtask. In case the child agent 204 determined one or more further (sub-)subtasks for completing the corresponding subtask, the child agent 204 may either complete the one or more (sub-)subtasks on its own to complete the corresponding subtask or instantiate one or more child agents 206 for completing one or more of the (sub-)subtask. This recursive way of splitting the task indicated by the user request into one or more task/agent levels may be repeated for a predefined number of times (e.g., a predefined recursion depth) or until a certain complexity of subtasks is reached (as explained with respect to Fig. 6).

In order to further increase the flexibility and scalability of the proposed architecture 200, the agents may be able to communicate with each other. In other words, transmitting and receiving of information is possible between hierarchy levels (e.g., between parent agent 202 and child agent 1 204 or between child agent 1 204 and child agent 1 206, or also between parent agent 202 and child agent 1 206 etc.) as well as within hierarchy levels (e.g., between child agent 1 204 and child agent n 204 or between child agent 1 206 and child agent n 206). It may be preferable to also implement (at least some of) the child agents as conversational agents such as the parent agent. This way, communication between the agents can be improved, because no clearly defined communication interface (e.g., a REST API) is required for the communication. Instead, it is sufficient that the agents transmit "human-like" message (e.g., "please open a web browser and search for information about chocolate and how to make chocolate on your own") between each other.

As explained with respect to Fig. 1, communication between agents is constrained, e.g., based on a user configuration, a user preference, a user permission and/or an information policy. These constrains may be implemented as a type of firewall surrounding each of the agents 202, 204, 206 (e.g., each agent may be associated with a firewall like privacy layer defining how to process and/or modify the information transmitted to and/or received from other agents). The firewall may be implemented hierarchy level wise (i.e., there may be one firewall between each of the hierarchy levels, e.g., a first firewall between the parent agent 202 and the child agents 204, a second firewall between the child agents 204 and the child agents 206 etc.) and/or within a hierarchy level (e.g., between child agent 1 204 and child agent n 204, etc.). Implementing the firewall may depend on the implementation of the inter-agent communication (e.g., whether communication between agents of different hierarchy levels and/or within the same hierarchy level is allowed). Additionally or alternatively, the firewall may also be applied with respect to the information processed by each agent within his own interaction space (e.g., if an agent is supposed to retrieve information from systems, such as the internet, the content of requests may be constrained e.g., with respect to allowed origin URLs).

In order to efficiently operate the agents, it may be beneficial to compress a history of conversation between the user and the agent(s) and/or between agents as well as the corresponding requests indicating (sub-)tasks to be performed. For example, if a user has often requested tasks associated with a certain application in the past, this history can be compressed and stored. Next time when the user requests a task associated with the certain application, a corresponding agent can decompress the compressed history allowing the agent to perform the task based on the history, which may enable the agent to provide a service customized to the preferences of the user. Apart from the improved user service, providing embeddings of said history compression has the advantage of less memory required for storing the history information. The embeddings may be stored in containers, wherein each container is associated with a unique identifier (e.g., a value of the embedding). The identifier may serve as an index for accessing the container (i.e., for saving and loading the corresponding embedding). This way, an efficient way of accessing the different embeddings (e.g., in terms of required time per request) is provided, because an agent can simply navigate/search through a plurality of different embeddings based on their corresponding identifiers (e.g., values) and the distance/difference between these identifiers.

Running a certain number of agents in parallel and displaying their progress may be computationally intensive. To still be able to visualize their work/progress, it may thus be beneficial to configure the display of the one or more application windows of the one or more agents as follows. Instead of each agent displaying its own application window, the agents may communicate with each other as outlined above. Using this communication, it is possible that only the parent agent is the one displaying the application windows and that the other agents, which are working on the corresponding subtasks, merely provide the parent agent with the information which is to be displayed by the parent agent. This way, complexity of the overall visualization can be reduced (e.g., due to a reduced number of parallel visualization threads running on the computer) and thus upheld (e.g., with respect to reliability and responsiveness to user input/modifications) even if a large number of agents are working in parallel.

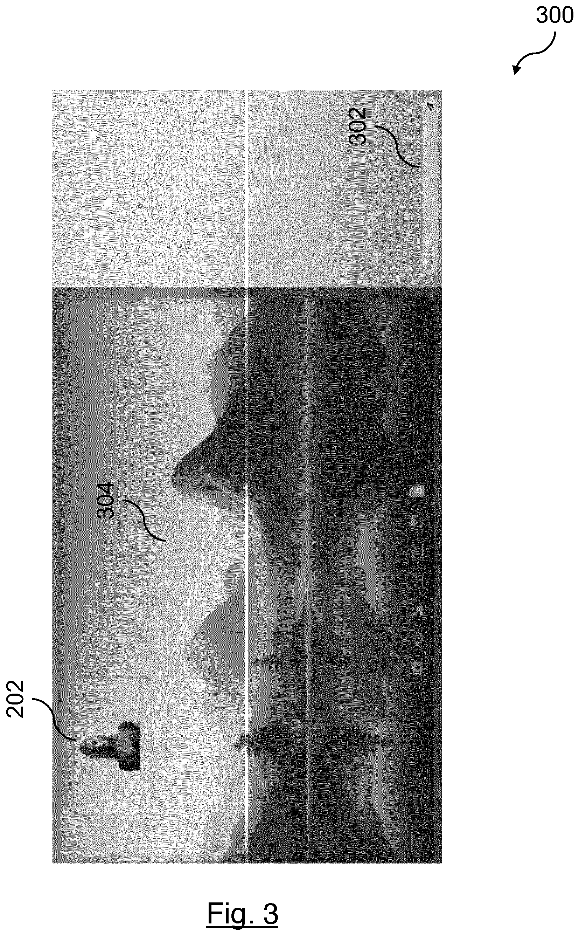

Fig. 3 illustrates a first overview 300 of an interaction between a user and an agent 202 in accordance with embodiments of the present disclosure. The overview 300 illustrated in Fig. 3 may relate to a start screen (which represents the interaction space of the parent agent 202) upon booting a computer on which the operating system as explained with respect to Fig. 1 is deployed. This means, that upon starting the computer by the user, the agent 202, as indicated by an avatar, is booted as well and acts like an additional artificial user of the operating system. The overview 300 additionally comprises an input means 302 for receiving user requests. The input means 302 may be, as shown, a chat window. Additionally or alternatively, the input means 302 may comprise voice input (e.g., via a microphone) or computer files (e.g., documents, mails, chat messages (e.g., WhatsApp), pictures, videos etc., which may be entered by a user via drag-and-drop or other interaction ways such as a file editor, e-mail editor of the operating system etc.) or other input options (e.g., brain-computer interfaces such as Neuralink). The overview 300 additionally comprises a visualization and interaction area 304 such as a home screen of common operating systems. However, the area 304 may be used not only by the user but also by the parent agent 202 and other child agents 204, 206.

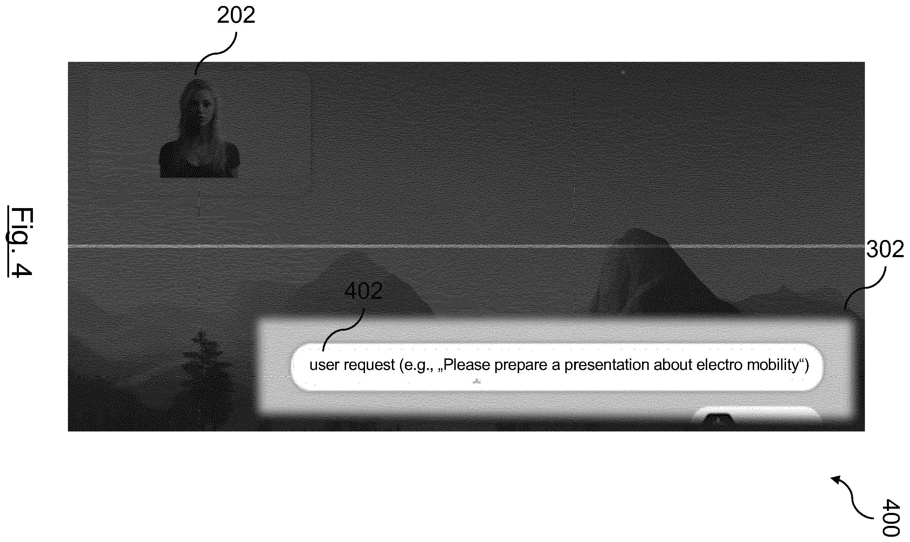

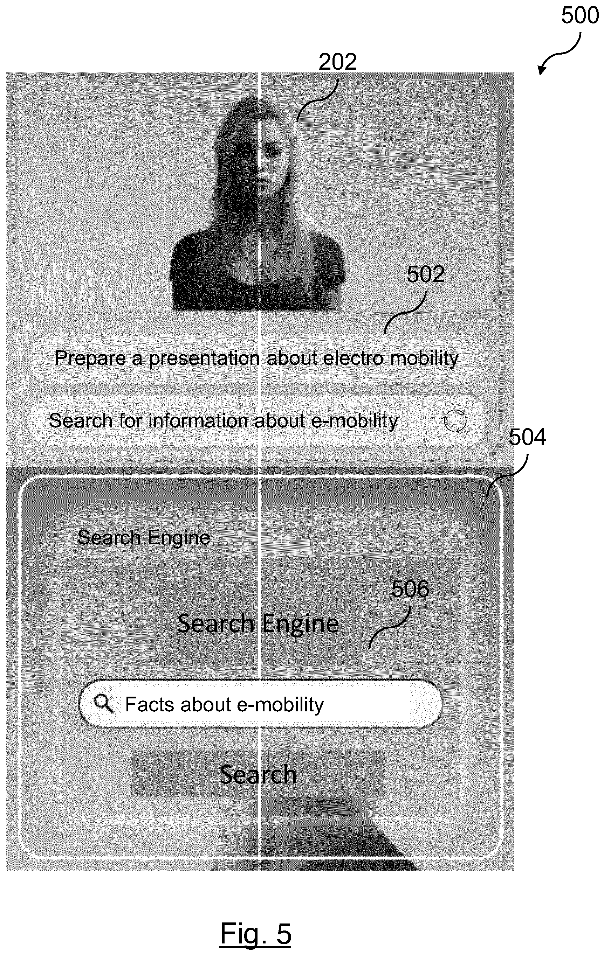

Fig. 4 illustrates a second overview 400 of an interaction between a user and an agent 202 in accordance with embodiments of the present disclosure in which a user request 402 is entered into the input means 302 by a user. In the illustrated example, the user 302 requests from the agent 202 a presentation (e.g., a Power Point presentation) about electro-mobility (e-mobility). In the following Figs. 5-7, the several steps of the method according to aspects of the present disclosure are explained in detail with respect to the mentioned example.

It is to be understood that this is only an example used to illustrate the idea behind the present disclosure. The method of the present disclosure is applicable to a wide range of tasks such as app development (e.g., a user enters a request to develop an app based on a API-documentation), web development (e.g., a user enters a request to develop a website for a given topic), integrating the agent 202 into filesystems (e.g., cloud drives such as Google Drive etc., hardware drives of the computer etc.), enhancing an interaction space of an agent (e.g., by adding a link of a website or by adding a browser plugin or other programs to the interaction space so that the agent is able to utilize the provided functionality) and using the agent 202 as a personal assistant (e.g., for customer support by mail, or scheduling of meetings or responding to other enquiries such as social media enquiries by potential customers), marketing management such as monitoring, placing and/or turning off online advertisements, customer questionnaires, creating company reports (e.g., about sales) based on the agent being connected to the database of the company, market research (e.g., by requesting information either directly from other users (e.g., via mail) or from their corresponding agents (e.g., an agent may track the history of interaction as outlined above and derive certain user preferences or user patterns which may then be shared with other agent; this information may for example be used to finetune the AI models underlying the agents so that performance can be improved) and many more. Apps or interaction spaces created this way may be shared with users of other computer systems (e.g., via a dedicated app store) so that users of other computer systems can reuse these interaction spaces or apps for their interaction with agents on their own computer system.

In one embodiment, such an app or interaction space may be provided by an external entity to interface with functionality provided by that entity. As an example, a car manufacturer may provide a list of API interfaces and/or descriptions of the corresponding functions and/or parameters. An app may then be created to provide an interaction space specifically using these interfaces and/or descriptions, which can be conceptualized as a sub-space. One AI agent may then communicate in natural language with the app, e.g., by stating "adjust the temperature to 20°", as one example. The app may then select a corresponding function and makes a function call. Depending on the result, the app may respond with "The temperature was adjusted to 20°", "no connection to the car possible", or the like.

Such a sub-space may also be pre-configured and packaged into an app. This way, whenever the app is invoked, a correspondingly pre-configured sub-space is spawned. Using this approach, it is possible to create arbitrarily complex app in a minimum amount of time. An AI within the app may even be trained separately to improve its performance.

Fig. 5 illustrates a third overview 500 of an interaction between a user and an agent 202 in accordance with embodiments of the present disclosure. As can be seen, once the agent 202 receives the user input 402 via the input means 302, the agent 202 starts processing the request in order to determine one or more subtasks for completing the task to be performed (in this example preparing a presentation about e-mobility). As illustrated, the agent 202 determines for the given task a first subtask, namely "search for information about e-mobility" and starts executing the first subtask. In order to provide the user with feedback (e.g., such that the user knows the agent 202 is working on the task), display of an application window is caused on a GUI (e.g., the area 304). In the illustrated example, a first application window 502 is displayed which comprises a visualization associated with the task (i.e., preparing a presentation). In the shown example, the visualization of the application window 502 comprises an overview visualization indicating a progress overview comprising the identified subtask(s) (e.g., "search for information about e-mobility). In addition, a second application window 504 associated with the subtask "search for information about e-mobility" is displayed. The application window 504 comprises a progress visualization 506 indicating the progress of the "search for information about e-mobility"). Said progress visualization 506 illustrates how a child agent (e.g., instantiated by the parent agent 202) opens a tab of a web browser, opens a search engine and searches for "facts about e-mobility". The fact that a child agent is working on the subtask (e.g., "search for information about e-mobility") is additionally visualized within the first application window 502 by causing a display of an "in progress" icon (i.e., a circle of arrows)".

Fig. 6 illustrates a fourth overview 600 of an interaction between a user and an agent 202 in accordance with embodiments of the present disclosure. In the illustrated example the initial task of "prepare a presentation about electro mobility" is at an advanced stage. As can be seen from the overview visualization within the application window 502, the task of "search for information about e-mobility" of a corresponding child agent has already been finished (i.e., the corresponding child agent may have been released). In the illustrated moment, two further child agents are working on the subtasks "generate the presentation" and "create images for the presentation". The corresponding visualization/application windows are illustrated at the right side of Fig. 6 (e.g., the area 304). In application window 602, the results of the subtask "search for information about e-mobility" are displayed. As this information results from a previous (i.e., already completed) subtask, the agent 202 may have placed the corresponding application window 602a in the background of area 304. Alternatively, it may also be possible that the application window 602a was moved by the user (i.e., modified by the user). Application window 602b relates to the subtask of "generate the presentation". The fact that a child agent is currently working on said subtask is further illustrated by the "in progress" icon illustrated next to said subtask within the overview visualization in application window 502. The same applies to the subtask of "create images for the presentation". For said subtask the corresponding application window 602c visualizes the progress of searching/creating the images for the presentation.

In order to illustrate the recursion criteria of reaching a certain complexity of subtasks (as mentioned with respect to Fig. 2), the example of the subtask "create images for the presentation" is chosen. Assume a child agent is instantiated for said subtask. In order to complete the subtask, the child agent determines one or more (sub-)subtasks. For example, the child agent may determine three (sub-)subtasks, namely "creating an image for a first slide", "creating an image for a second slide" and "creating an image for a third slide". Accordingly, it may be determined that the complexity of these three (sub-)subtasks has reached a certain, low complexity (i.e., further splitting the task of creating one image is unreasonable). As a result, no further recursive iterations of instantiating child agents for identifying (sub-)subtasks may be conducted.

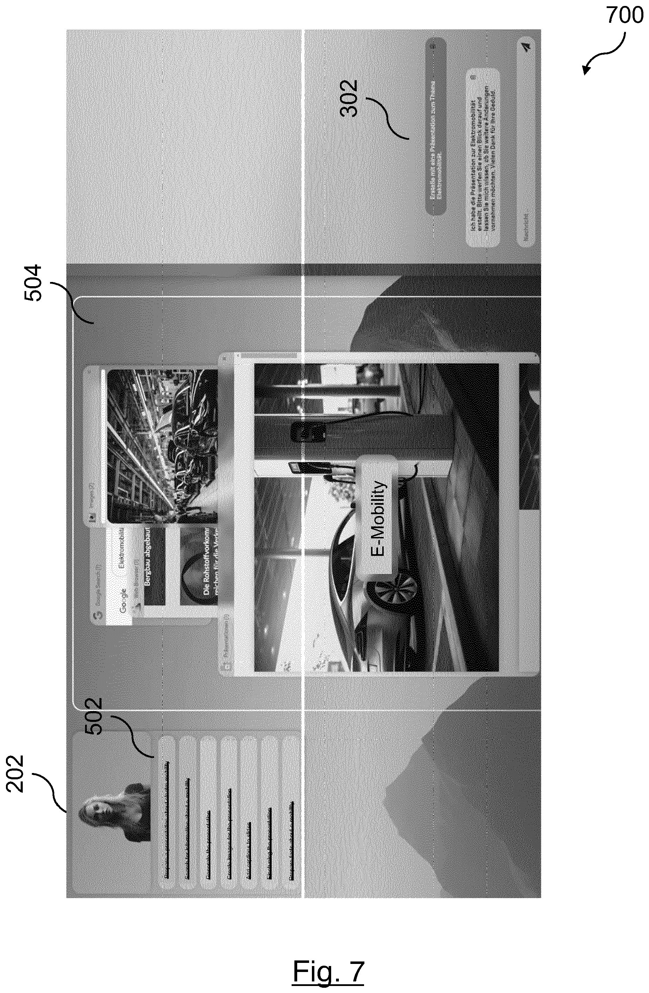

Fig. 7 illustrates a fifth overview 700 of an interaction between a user and an agent in accordance with embodiments of the present disclosure. The overview 700 illustrates the completion of the task indicated by the user request (i.e., in the present example "prepare a presentation about e-mobility"). As can be seen from the application window 502 comprising the progress overview visualization, each of the conducted subtasks as well as the indicated task was completed (as indicated by the corresponding (sub-)task being crossed out). In addition, application window 504 now illustrates the results of the completed task, namely a generated presentation about e-mobility. In addition, the agent 202 provides corresponding feedback about the completion of the task via the input means 302 (e.g., by issuing a chat message indicating the completion of the task).

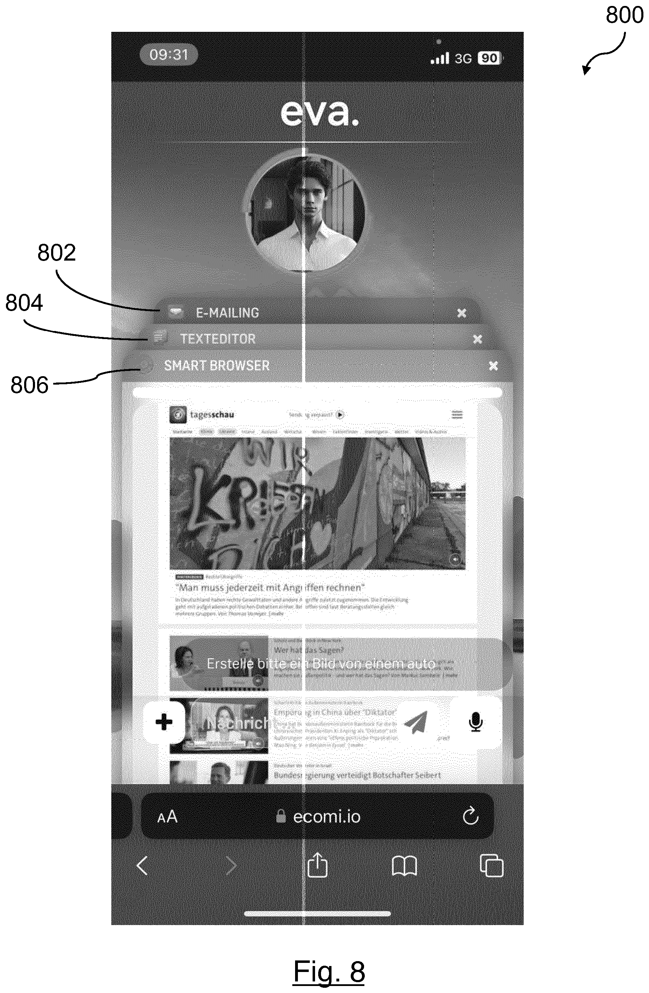

Fig. 8 illustrates a sixth overview 800 of a mobile version of a graphical user interface in accordance with embodiments of the present disclosure. There are three application windows 802, 804 and 806 currently open. Because of the limited screen space on mobile devices, the application windows are stacked on top of each other, with the "SMART BROWSER" application window 806 being in the foreground (according to the Z-index described further above). This way, an optimal balance between overview over all subtasks and information about the current subtask is achieved.

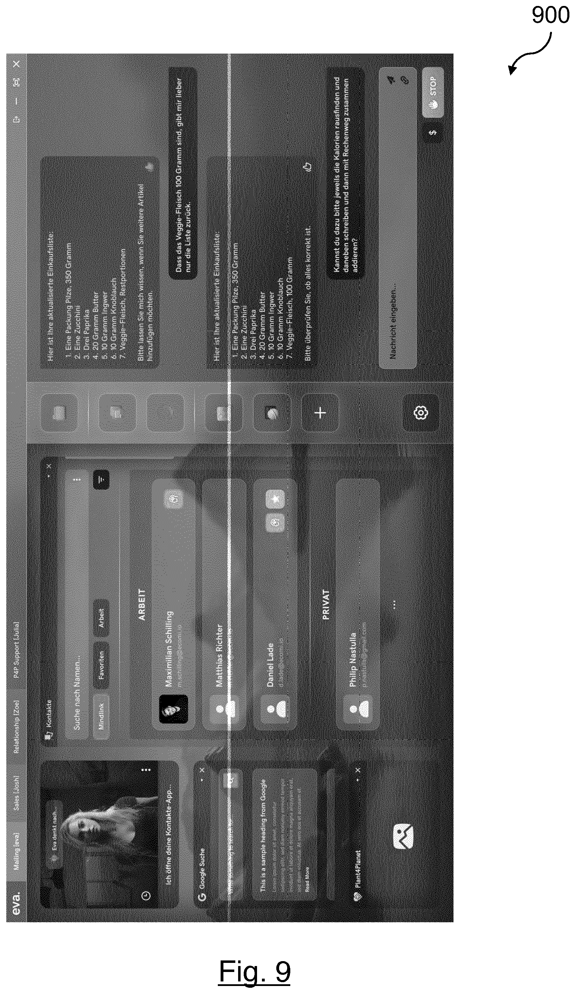

Fig. 9 illustrates a seventh overview 900 of a graphical user interface in accordance with embodiments of the present disclosure. There are multiple application windows currently open, which have been automatically arranged relative to each other to give the user an optimal overview.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. **In** one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

**In** other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Certain aspects disclosed herein may involve the use of machine learning techniques. In particular, the AI assistants and/or AI agents disclosed herein may comprise or otherwise use one or more machine-learning models and/or algorithms. Machine learning, as referred to herein, is a subfield of artificial intelligence (AI) that encompasses a set of computational techniques and algorithms designed to enable computer systems to learn from and make predictions or decisions based on data, patterns, and experiences, without being explicitly programmed for each specific task. Machine learning algorithms are capable of automatically improving their performance over time through exposure to new data, allowing them to adapt to changing circumstances and optimize their outputs. These algorithms often involve the use of statistical models, neural networks, and other mathematical constructs to analyze and derive insights from datasets, recognize patterns, classify information, and make data-driven predictions. Machine learning techniques encompass a broad spectrum of methodologies, including supervised learning, unsupervised learning, reinforcement learning, deep learning, and more, which can be employed in various embodiments described in this patent application to enhance the functionality, adaptability, and efficiency of the disclosed systems and methods.

Conversational AI assistants and/or conversational AI agents may involve natural language processing, e.g., by way of large language models (LLMs). A large language model (LLM) is a type of artificial intelligence (AI) model that is designed to understand and generate human language. These models are characterized by their immense size, complexity, and capacity to process and generate text in a way that mimics human language understanding and production. A large language model is a deep learning-based neural network architecture that excels at natural language processing (NLP) tasks. Large language models have revolutionized the field of NLP and have enabled advancements in tasks like language translation, sentiment analysis, chatbots, and information retrieval. They continue to be a focal point of research and development in the AI community, with ongoing efforts to enhance their capabilities and address ethical and societal concerns related to their deployment. It is characterized by the following key features:
1. Size: Large language models are massive in terms of the number of parameters they contain. These models often have hundreds of millions to billions of parameters, which are the learnable elements of the neural network. The vast number of parameters enables these models to capture intricate patterns and relationships in language data.
2. Transformer Architecture: Most large language models are built upon the Transformer architecture. The Transformer architecture, introduced in the paper "Attention Is All You Need," is highly efficient at handling sequential data like text. It utilizes self-attention mechanisms to capture contextual information across the input sequence, making it well-suited for NLP tasks.
3. Pretraining: Large language models undergo a pretraining phase where they are trained on vast corpora of text data from the internet, books, articles, and more. During pretraining, the model learns to predict the next word in a sentence or fill in masked words. This process imparts the model with general language understanding and knowledge.
4. Fine-Tuning: After pretraining, the model can be fine-tuned on specific NLP tasks. Fine-tuning involves training the model on task-specific data to adapt it to particular applications, such as text classification, question-answering, or language generation. This fine-tuning process tailors the model's capabilities to the target task.
5. Multimodal Abilities: Some large language models have been extended to handle multimodal data, such as text and images. This allows them to perform tasks that involve both language and visual understanding, like image captioning or visual question-answering.
6. Language Generation: Large language models are known for their ability to generate coherent and contextually relevant text. They can produce human-like text in response to prompts or questions and are used in applications like chatbots, content generation, and even creative writing.
7. Versatility: Due to their pretraining and fine-tuning capabilities, large language models can be applied to a wide range of NLP tasks without significant architectural changes. This versatility makes them valuable tools in various industries, including healthcare, finance, customer service, and more.
8. Resource-Intensive: Training and using large language models require substantial computational resources, including powerful GPUs or TPUs and large-scale datasets. This resource intensity can make them expensive to develop and deploy.

Most of these LLMs are based on the above-mentioned transformer architecture or its variations. Examples of transformer-based architectures used for LLMs are:
1. GPT (Generative Pre-trained Transformer): Developed by OpenAI, the GPT series includes models like GPT-2 and GPT-3. These models are designed for natural language generation and understanding. GPT-3, in particular, is one of the largest language models to date, with 175 billion parameters.
2. BERT (Bidirectional Encoder Representations from Transformers): BERT, developed by Google, is a pretraining model that introduced the concept of bidirectional context for language understanding. It has been widely used for various NLP tasks, including text classification, named entity recognition, and question-answering.
3. RoBERTa (A Robustly Optimized BERT Pretraining Approach): RoBERTa is a variant of BERT that was further optimized for pretraining. It uses a larger training corpus and longer sequences, resulting in improved performance on various NLP benchmarks.
4. XLNet (eXtreme MultiLabelNet): XLNet is another Transformer-based model that extends the BERT architecture. It leverages a permutation-based training approach to capture bidirectional dependencies, similar to BERT, while also addressing some of its limitations.
5. T5 (Text-to-Text Transfer Transformer): T5, developed by Google, frames all NLP tasks as text-to-text problems. It has demonstrated strong performance on a wide range of tasks and is known for its simplicity and effectiveness.
6. BERT Variants: Numerous variants and adaptations of the BERT architecture exist, including DistilBERT (a smaller, distilled version), ALBERT (A Lite BERT), and ELECTRA (Efficiently Learning an Encoder that Classifies Tokens as Real or Fake), each with its own unique enhancements or optimizations.
7. GPT Variants: Besides GPT-3, there are other variants like GPT-Neo, GPT-J, and more, which aim to replicate some of the capabilities of GPT-3 while being more accessible due to their smaller sizes.
8. BART (Bidirectional and Auto-Regressive Transformers): BART is a model designed for sequence-to-sequence tasks, including text summarization, translation, and more. It utilizes a denoising autoencoder approach for pretraining.
9. ERNIE (Enhanced Representation through kNowledge Integration): Developed by Baidu, ERNIE incorporates external knowledge sources during training to improve language understanding and reasoning.
10. DialoGPT: An extension of the GPT-2 model fine-tuned specifically for generating human-like responses in conversational settings. It is used in chatbots and virtual assistants.

Typical components for implementing these models are:
1. The Transformer architecture, which is a deep learning model designed for sequence-to-sequence tasks, particularly suited for handling sequential data like text.
2. Encoder-Decoder Framework: Deciding about whether both components (encoder and decoder) or only the decoder part of the Transformer is used. In the context of GPT, this decoder is referred to as the "autoregressive" model.
3. Stacked Layers: For example, GPT consists of multiple layers, usually ranging from dozens to hundreds, each of which contains the same set of sub-modules. These sub-modules include:
   a. Multi-Head Self-Attention: This mechanism allows the model to weigh the importance of different words or tokens in the input sequence when making predictions. It captures long-range dependencies and contextual information effectively.
   b. Feedforward Neural Networks: After the self-attention mechanism, there is a feedforward neural network for each position in the sequence. It processes the information from the self-attention step and produces intermediate representations.
   c. Layer Normalization: Layer normalization is applied after each sub-module to stabilize training and improve the flow of gradients during backpropagation.
4. Positional Encoding: Since the Transformer architecture does not inherently capture the order of tokens in a sequence (it only considers token relationships), some may use positional encodings to inform the model about the position of each token in the sequence. This allows the model to understand the order of words in a sentence.
5. Self-Attention Mechanism: The self-attention mechanism allows the model to focus on different parts of the input sequence when making predictions. It computes weighted sums of the embeddings of all tokens in the sequence, considering their importance for the current token being predicted.
6. Parameter Sharing across all layers, meaning that the same set of weights and biases are used for each layer. This allows the model to generalize better and reduces the number of parameters compared to models that don't share parameters.
7. Autoregressive Generation: Generating text in an autoregressive manner, meaning it predicts one token at a time while conditioning on the previously generated tokens. This sequential generation process continues until the desired length of text is produced.
8. Training: LLMs models typically undergo a two-step training process. First, they are pretrained on a massive corpus of text data to learn language understanding and grammar. Then, they are fine-tuned on specific NLP tasks, such as text classification or language translation, to adapt them to particular applications.
9. Scalability: LLM models come in different sizes, with varying numbers of parameters. Larger models tend to perform better but require more computational resources.

## Claims

1. A computer-implemented method (100) performed by a conversational artificial intelligence, AI, agent, (202, 204, 206), the method comprising:
receiving (102), from a user, a user request in natural language indicating a task to be performed;
determining (104) one or more subtasks for completing the task to be performed; and
executing (106) the one or more determined subtasks;
wherein executing a subtask of the one or more determined subtasks comprises:
transmitting information associated with the subtask to another AI agent,
wherein the information is necessary for progressing and/or completing another subtask of the one or more subtasks;
modifying, before transmitting the information associated with the subtask to the other AI agent, the information according to an information policy, wherein modifying the information according to the information policy comprises:
filtering, preferably using an AI model, user related, secret and/or internal information and/or information associated with a conversation between the user and the conversational AI agent such that the filtered information is not transmitted to the other AI agent;
rendering at least part of the information anonymous; and/or
applying a traceability mark to the information associated with the subtask;
wherein the step of executing the one or more subtasks comprises, for at least one of the subtasks, causing (108) display of an application window on a graphical user interface, GUI, comprising a visualization associated with the subtask, wherein the visualization associated with the subtask comprises:
an initiation visualization indicating a start of the subtask;
a progress visualization indicating a progress of the subtask;
a finalization visualization indicating a completion of the subtask; and/or
an overview visualization indicating a progress overview of the one or more subtasks.

2. The method of claim 1,
wherein the displaying of each application window is based on a processing order of the one or more subtask for completing the task to be performed.

3. The method of any one of the preceding claims, further comprising:
receiving a user input for modifying the application window;
wherein modifying the application window comprises:
modifying one or more characteristics of the application window, in particular a size of the window and/or a position of the window on the display; and/or
modifying content of the application window.

4. The method of any one of the preceding claims 1 or 2, further comprising:
automatically modifying one or more characteristics of the application window, in particular a size of the window and/or a position of the window on the display.

5. The method of any one of the preceding claims, wherein executing a subtask of the one or more determined subtasks comprises:
performing one or more actions for progressing the subtask;
wherein the one or more actions comprise at least an input action to a GUI element of the application window.

6. The method of any one of the preceding claims, wherein executing a subtask of the one or more determined subtasks comprises:
receiving information associated with another subtask of the one or more subtasks from another AI agent;
wherein the information is necessary for progressing and/or completing the subtask.

7. The method of any one of the preceding claims, wherein transmitting the information associated with the subtask is based on a user configuration, in particular a user preference and/or a user permission.

8. The method of any one of the preceding claims, further comprising:
instantiating an AI agent for each of the one or more subtasks;
wherein each instantiated AI agent is responsible for completing one subtask of the one or more subtasks; and
preferably, releasing one or more of the instantiated AI agents upon completion of the corresponding subtask.

9. The method of any one of the preceding claims, wherein the progress overview of the one or more subtasks comprises:
one or more subtasks in progress;
one or more upcoming subtasks;
one or more completed subtasks; or any combination thereof.

10. The method of any one of the preceding claims, wherein the display of the application window on the GUI comprising the visualization associated with the subtask is similar to a screen-sharing session between two or more users.

11. A data processing apparatus comprising means for performing the method of any one of the claims 1-10.

12. A computer program or a computer-readable medium having stored thereon a computer program, the computer program comprising instructions which, when the program is executed by a computer, cause the computer to carry out the method of any one of the claims 1-10.

## Patentansprüche

1. Ein computerimplementiertes Verfahren (100), das von einem dialogorientierten künstlichen Intelligenz-Agenten (AI) (202, 204, 206) ausgeführt wird, wobei das Verfahren umfasst:
Empfangen (102) einer Benutzeranforderung in natürlicher Sprache von einem Benutzer, die eine auszuführende Aufgabe angibt;
Bestimmen (104) einer oder mehrerer Teilaufgaben zum Ausführen der auszuführenden Aufgabe; und
Ausführen (106) der einen oder mehreren bestimmten Teilaufgaben;
wobei das Ausführen einer Teilaufgabe der einen oder mehreren bestimmten Teilaufgaben umfasst:
Übertragen von Informationen, die mit der Teilaufgabe verbunden sind, an einen anderen Kl-Agenten, wobei die Informationen für das Voranschreiten und/oder Ausführen einer anderen Teilaufgabe der einen oder mehreren Teilaufgaben erforderlich sind;
Modifizieren der Informationen gemäß einer Informationsrichtlinie, bevor die mit der Unteraufgabe verbundenen Informationen an den anderen Kl-Agenten übertragen werden, wobei das Modifizieren der Informationen gemäß der Informationsrichtlinie umfasst:
Filtern, vorzugsweise unter Verwendung eines KI-Modells, von benutzerbezogenen, geheimen und/oder internen Informationen und/oder Informationen, die mit einer Konversation zwischen dem Benutzer und dem Konversations-Kl-Agenten verbunden sind, so dass die gefilterten Informationen nicht an den anderen Kl-Agenten übertragen werden;
Anonymisieren mindestens eines Teils der Informationen; und/oder
Anbringen einer Rückverfolgbarkeitsmarkierung an den mit der Teilaufgabe verbundenen Informationen;
wobei der Schritt des Ausführens der einen oder mehreren Unteraufgaben für mindestens eine der Unteraufgaben das Veranlassen (108) der Anzeige eines Anwendungsfensters auf einer grafischen Benutzeroberfläche (GUI) umfasst, das eine mit der Unteraufgabe verbundene Visualisierung umfasst, wobei die mit der Unteraufgabe verbundene Visualisierung umfasst:
eine Initiierungsvisualisierung, die einen Start der Teilaufgabe anzeigt;
eine Fortschrittsvisualisierung, die einen Fortschritt der Teilaufgabe anzeigt;
eine Abschlussvisualisierung, die den Abschluss der Teilaufgabe anzeigt; und/oder
eine Übersichtsvisualisierung, die eine Fortschrittsübersicht der einen oder mehreren Teilaufgaben anzeigt.

2. Das Verfahren nach Anspruch 1,
wobei die Anzeige jedes Anwendungsfensters auf einer Verarbeitungsreihenfolge der einen oder mehreren Teilaufgaben zum Abschließen der auszuführenden Aufgabe basiert.

3. Das Verfahren nach einem der vorstehenden Ansprüche, das ferner umfasst:
Empfangen einer Benutzereingabe zum Modifizieren des Anwendungsfensters;
wobei das Modifizieren des Anwendungsfensters umfasst:
Ändern einer oder mehrerer Eigenschaften des Anwendungsfensters, insbesondere einer Größe des Fensters und/oder einer Position des Fensters auf dem Display; und/oder
Ändern des Inhalts des Anwendungsfensters.

4. Verfahren nach einem der vorstehenden Ansprüche 1 oder 2, das ferner umfasst:
automatisches Modifizieren einer oder mehrerer Eigenschaften des Anwendungsfensters, insbesondere einer Größe des Fensters und/oder einer Position des Fensters auf dem Display.

5. Verfahren nach einem der vorstehenden Ansprüche 1 oder 2, wobei das Ausführen einer Teilaufgabe der einen oder mehreren bestimmten Teilaufgaben umfasst:
Durchführen einer oder mehrerer Aktionen zum Fortführen der Teilaufgabe;
wobei die eine oder mehreren Aktionen mindestens eine Eingabeaktion in ein GUI-Element des Anwendungsfensters umfassen.

6. Das Verfahren nach einem der vorstehenden Ansprüche, wobei das Ausführen einer Teilaufgabe der einen oder mehreren bestimmten Teilaufgaben umfasst:
Empfangen von Informationen, die mit einer anderen Teilaufgabe der einen oder mehreren Teilaufgaben verbunden sind, von einem anderen Kl-Agenten;
wobei die Informationen für den Fortschritt und/oder den Abschluss der Teilaufgabe erforderlich sind.

7. Das Verfahren nach einem der vorstehenden Ansprüche, wobei das Senden der mit der Teilaufgabe verbundenen Informationen auf einer Benutzerkonfiguration, insbesondere einer Benutzereinstellung und/oder einer Benutzerberechtigung, basiert.

8. Das Verfahren nach einem der vorstehenden Ansprüche, das ferner umfasst:
Instanziieren eines KI-Agenten für jede der einen oder mehreren Teilaufgaben;
wobei jeder instanziierte KI-Agent für die Ausführung einer Teilaufgabe der einen oder mehreren Teilaufgaben verantwortlich ist; und
vorzugsweise Freigeben eines oder mehrerer der instanziierten KI-Agenten nach Abschluss der entsprechenden Teilaufgabe.

9. Das Verfahren nach einem der vorstehenden Ansprüche, wobei die Fortschrittsübersicht der einen oder mehreren Teilaufgaben umfasst:
eine oder mehrere Teilaufgaben in Bearbeitung;
eine oder mehrere anstehende Teilaufgaben;
eine oder mehrere abgeschlossene Teilaufgaben; oder eine beliebige Kombination davon.

10. Das Verfahren nach einem der vorstehenden Ansprüche, wobei die Anzeige des Anwendungsfensters auf der GUI, die die mit der Teilaufgabe verbundene Visualisierung umfasst, einer Bildschirmfreigabesitzung zwischen zwei oder mehr Benutzern ähnelt.

11. Eine Datenverarbeitungsvorrichtung, die Mittel zum Ausführen des Verfahrens nach einem der Ansprüche 1 bis 10 umfasst.

12. Ein Computerprogramm oder ein computerlesbares Medium, auf dem ein Computerprogramm gespeichert ist, wobei das Computerprogramm Anweisungen umfasst, die, wenn das Programm von einem Computer ausgeführt wird, den Computer veranlassen, das Verfahren nach einem der Ansprüche 1 bis 10 auszuführen.

## Revendications

1. Procédé mis en œuvre par ordinateur (100) exécuté par un agent d'intelligence artificielle conversationnelle (IA) (202, 204, 206), le procédé comprenant :
la réception (102), de la part d'un utilisateur, d'une demande utilisateur en langage naturel indiquant une tâche à effectuer ;
déterminer (104) une ou plusieurs sous-tâches pour accomplir la tâche à exécuter ; et
exécuter (106) la ou les sous-tâches déterminées ;
dans lequel l'exécution d'une sous-tâche parmi la ou les sous-tâches déterminées comprend :
transmettre des informations associées à la sous-tâche à un autre agent IA, les informations étant nécessaires pour faire progresser et/ou accomplir une autre sous-tâche parmi la ou les sous-tâches ;
modifier, avant de transmettre les informations associées à la sous-tâche à l'autre agent IA, les informations conformément à une politique d'information, la modification des informations conformément à la politique d'information comprenant :
filtrer, de préférence à l'aide d'un modèle d'IA, les informations relatives à l'utilisateur, les informations secrètes et/ou internes et/ou les informations associées à une conversation entre l'utilisateur et l'agent d'IA conversationnel, de telle sorte que les informations filtrées ne soient pas transmises à l'autre agent d'IA ;
rendre au moins une partie des informations anonymes ; et/ou
appliquer une marque de traçabilité aux informations associées à la sous-tâche ;
dans lequel l'étape d'exécution d'une ou plusieurs sous-tâches comprend, pour au moins l'une des sous-tâches, le fait de provoquer (108) l'affichage d'une fenêtre d'application sur une interface utilisateur graphique, GUI, comprenant une visualisation associée à la sous-tâche, dans lequel la visualisation associée à la sous-tâche comprend :
une visualisation d'initiation indiquant le début de la sous-tâche ;
une visualisation de progression indiquant la progression de la sous-tâche ;
une visualisation de finalisation indiquant l'achèvement de la sous-tâche ; et/ou
une visualisation d'aperçu indiquant un aperçu de la progression de la ou des sous-tâches.

2. Procédé selon la revendication 1,
dans lequel l'affichage de chaque fenêtre d'application est basé sur un ordre de traitement de la ou des sous-tâches pour accomplir la tâche à effectuer.

3. Procédé selon l'une quelconque des revendications précédentes, comprenant en outre :
la réception d'une entrée utilisateur pour modifier la fenêtre d'application ;
dans lequel la modification de la fenêtre d'application comprend :
la modification d'une ou plusieurs caractéristiques de la fenêtre d'application, en particulier la taille de la fenêtre et/ou la position de la fenêtre sur l'écran ; et/ou
la modification du contenu de la fenêtre d'application.

4. Procédé selon l'une quelconque des revendications 1 ou 2 précédentes, comprenant en outre :
la modification automatique d'une ou plusieurs caractéristiques de la fenêtre d'application, en particulier la taille de la fenêtre et/ou la position de la fenêtre sur l'écran.

5. Procédé selon l'une quelconque des revendications précédentes 1 ou 2, dans lequel l'exécution d'une sous-tâche parmi une ou plusieurs sous-tâches déterminées comprend :
l'exécution d'une ou plusieurs actions pour faire progresser la sous-tâche ;
dans lequel la ou les actions comprennent au moins une action d'entrée sur un élément GUI de la fenêtre d'application.

6. Procédé selon l'une quelconque des revendications précédentes, dans lequel l'exécution d'une sous-tâche parmi une ou plusieurs sous-tâches déterminées comprend :
la réception d'informations associées à une autre sous-tâche parmi les une ou plusieurs sous-tâches provenant d'un autre agent IA ;
dans lequel les informations sont nécessaires pour faire progresser et/ou achever la sous-tâche.

7. Procédé selon l'une quelconque des revendications précédentes, dans lequel la transmission des informations associées à la sous-tâche est basée sur une configuration utilisateur, en particulier une préférence utilisateur et/ou une autorisation utilisateur.

8. Procédé selon l'une quelconque des revendications précédentes, comprenant en outre :
l'instanciation d'un agent IA pour chacune des une ou plusieurs sous-tâches ;
dans lequel chaque agent IA instancié est responsable de l'exécution d'une sous-tâche parmi la ou les sous-tâches ; et
de préférence, la libération d'un ou plusieurs agents IA instanciés à l'achèvement de la sous-tâche correspondante.

9. Procédé selon l'une quelconque des revendications précédentes, dans lequel l'aperçu de la progression d'une ou plusieurs sous-tâches comprend :
une ou plusieurs sous-tâches en cours ;
une ou plusieurs sous-tâches à venir ;
une ou plusieurs sous-tâches terminées ; ou toute combinaison de celles-ci.

10. Procédé selon l'une quelconque des revendications précédentes, dans lequel l'affichage de la fenêtre d'application sur l'interface graphique comprenant la visualisation associée à la sous-tâche est similaire à une session de partage d'écran entre deux ou plusieurs utilisateurs.

11. Appareil de traitement de données comprenant des moyens pour mettre en œuvre le procédé selon l'une quelconque des revendications 1 à 10.

12. Programme informatique ou support lisible par ordinateur sur lequel est stocké un programme informatique, le programme informatique comprenant des instructions qui, lorsque le programme est exécuté par un ordinateur, amènent l'ordinateur à mettre en œuvre le procédé selon l'une quelconque des revendications 1 à 10.
